# EUROPÄISCHE PATENTSCHRIFT

(11) **EP 2 582 921 B1**
(45) Veröffentlichungstag und Bekanntmachung des Hinweises auf die Patenterteilung: **14.05.2014**
(21) Anmeldenummer: 11724976.3
(22) Anmeldetag: 14.06.2011
(51) Int. Cl.: F01D 9/02, F02C 7/045

(54) **TURBOMASCHINE MIT GERÄUSCHREDUZIERUNG**
NOISE-REDUCED TURBOMACHINE
TURBOMACHINE À RÉDUCTION DE BRUIT

(30) Priorität: 14.06.2010 DE 102010023703
(43) Veröffentlichungstag der Anmeldung: 24.04.2013
(73) Patentinhaber: Rolls-Royce Deutschland Ltd & Co KG, 15827 Blankenfelde-Mahlow (DE)
(72) Erfinder: ROSE, Marco, 09599 Freiberg (DE); WILLER, Lars, 12249 Berlin (DE)
(74) Vertreter: Hoefer & Partner
(86) Internationale Anmeldenummer: PCT/EP2011/002919
(87) Internationale Veröffentlichungsnummer: WO 2011/157398

(56) Entgegenhaltungen:
- EP-A1- 1 950 383
- EP-A2- 1 382 855
- EP-A2- 1 536 146
- EP-A2- 1 998 003
- GB-A- 1 085 227

## Beschreibung

Die Erfindung bezieht sich auf eine Turbomaschine mit Geräuschreduzierung gemäß den Merkmalen des Oberbegriffs des Anspruchs 1.

Im Einzelnen bezieht sich die Erfindung auf eine Turbomaschine mit einem durchströmten ringförmigen Hauptströmungskanal, in welchem zumindest ein mit Statorschaufeln versehener Stator und stromab von diesem ein mit Rotorschaufeln versehener Rotor angeordnet sind. Im Speziellen kann die Erfindung in Form eines Gasturbinentriebwerks oder einer stationären Gasturbine ausgebildet werden.

Die Erfindung bezieht sich dabei ganz allgemein auf jede Stator-Rotor-Anordnung, welche bei einem Flugzeugtriebwerk oder einer stationären Gasturbineanlage oder eines Wellenleistungstriebwerks vorgesehen sein kann. Die erfindungsgemäße Anordnung kann dabei in den unterschiedlichen Baugruppen zum Einsatz kommen, nämlich beispielsweise bei einem Bläser, bei einem Booster, bei einem Kompressor oder bei einer Turbine.

Die Erfindung bezieht sich somit ganz allgemein auf Turbomaschinen, bei welchen eine Energieumwandlung stattfindet. Das Arbeitsmedium kann dabei Gas, Dampf oder Flüssigkeit sein.

Die Erfindung ist somit nicht auf Gasturbinen beschränkt.

Bei Stator-Rotor-Kombinationen strömt das Arbeitsmedium im Allgemeinen in Richtung einer Rotationsachse (Maschinenachse) oder auch in radialer Richtung oder in eine Kombination aus axialer und radialer Richtung.

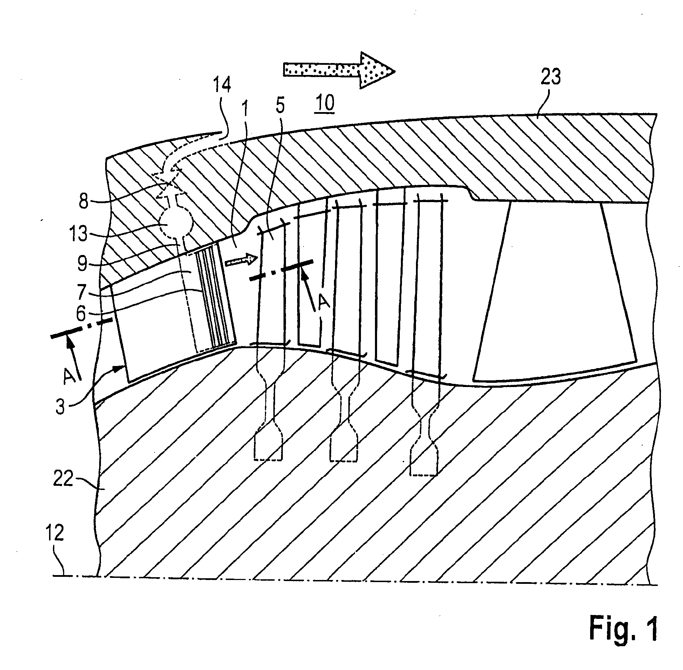

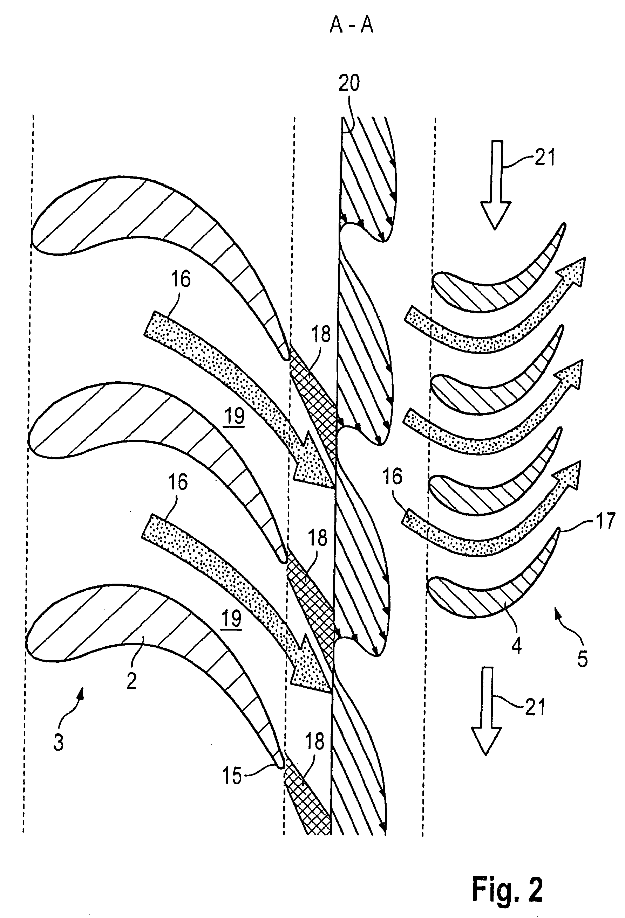

Die Fig. 2 zeigt in schematischer Weise eine derartige Anordnung in einer Axialschnittebene (siehe auch Fig. 1). Dabei erfolgt die Strömung von links nach rechts gemäß Fig. 2, so dass die Strömung zunächst Statorschaufeln 2 durchströmt, nachfolgend nach Abströmung von einer Profilhinterkante des Stators (Abströmkante) 15 der jeweiligen Statorschaufel 2 in einen Zwischenraum gelangt und nachfolgend in den Bereich von Rotorschaufeln 4 einströmt.

Das in Fig. 2 gezeigte ebene Schaufelgitter bewirkt somit, dass in einem durch die Statorschaufeln 2 gebildeten Stator 3 ein Arbeitsmedium 16 in Rotationsrichtung eines durch die Rotorschaufeln 4 gebildeten Rotors 5 umgelenkt wird. In dem Rotor 5 expandiert die Strömung, dabei wird das Arbeitsmedium 16 beschleunigt. Nach dem Impulssatz der Strömungsmechanik ergibt sich aus dem Eintritts- und Austrittsimpuls ein resultierender Impuls, der Reaktionsimpuls. Die daraus resultierende Kraftkomponente in Umfangsrichtung versetzt den Rotor 5 in Rotation. Stromab der Profilhinterkanten des Stators (Abströmkanten) 15 von Stator 3 bzw. Profilhinterkante des Rotors (Abströmkante) 17 von Rotor 5 besitzt die Strömung lokale Gebiete mit geringem Impuls. Diese sogenannten Nachlaufgebiete sind in Fig. 2 mit dem Bezugszeichen 18 dargestellt. Die Strömung des Nachlaufes weist eine geringere Strömungsgeschwindigkeit in Richtung der Hauptströmung gegenüber der Strömung in einer Passage 19 zwischen den Statorschaufeln 2 sowie eine Wirbelbildung auf.

Die Fig. 2 zeigt eine variierende Strömungsgeschwindigkeit infolge der Nachläufe, welche sich periodisch in Umfangsrichtung 20 ergibt. Durch die relative Bewegung zwischen dem Rotor 5 und dem Stator 3 bzw. dem Stator 3 und dem Rotor 5 entstehen somit eine zeitveränderliche Geschwindigkeit und ein zeitveränderlicher Impuls an einem Ort im ruhenden System (Stator) bzw. bewegten System (Rotor). Trifft die vom Stator 3 bzw. Rotor 5 abgehende Strömung auf den stromab liegenden Rotor bzw. Stator, erzeugt die zeitveränderliche, periodische Strömung am Rotor bzw. Stator ein zeitlich periodisch veränderliches Druckfeld. Diese Interaktion der Strömung, insbesondere das Auftreffen des Nachlaufs 18 (Nachlaufströmung) auf die Beschaufelung stromab, ist ein unerwünschter, jedoch sehr effektiver Erzeugungsmechanismus für den tonalen Lärm in einer derartigen Turbomaschine. Häufig ist es die dominierende Lärmquelle oder Geräuschquelle.

Derartige Strömungsverhältnisse und Lärmerzeugungsmechanismen treten auch in einem Triebwerksbläser durch eine Interaktion des Nachlaufs des Rotors mit den Statoren des Nebenstromkanals sowie im Kompressor auf.

Aus dem Stand der Technik sind sowohl aktive als auch passive Lösungen zur Lärmminderung oder Lärmreduzierung bekannt.

Bei den passiven Lösungen werden beispielsweise akustische Schallabsorber verschiedener Bauform verwendet, welche die Energie der sich ausbreitenden akustischen Felder reduzieren. Bauartbedingt sind derartige Maßnahmen jedoch nicht immer optimal einsetzbar und auch hinsichtlich ihrer Wirkung nicht völlig zufriedenstellend.

Bei den aktiven Lösungen sind verstellbare Elemente an den Vorderkanten und/oder Hinterkanten von Profilen bekannt. Derartige Maßnahmen sind technisch schwierig zu realisieren. Weiterhin ist es bekannt, gasförmige oder flüssige Medien aus der Oberfläche von Rotoren bzw. Statoren auszublasen. Eine derartige Lösung zeigt beispielsweise die US 5 813 625 A.

Das Ausblasen von Fluid in der Nähe der Vorderkante bzw. Hinterkante erweist sich jedoch nicht als effizient.

Aus der EP 1 536 146 A2 ist eine Strömungsarbeitsmaschine mit Fluidentnahme vorbekannt. Bei dieser wird Fluid durch die Statorschaufeln abgeleitet. Dieses Fluid wird jedoch entweder zur Umgebung hin abgeleitet oder in den Strömungskanal zurückgeführt.

Eine ähnliche Ausgestaltung zeigt die EP 1 382 855 A2.

Die GB 1 085 227 A beschreibt eine Ausgestaltung einer Fluggasturbine, bei welcher zur Vermeidung von Turbulenzen an den Schaufeln ein Unterdruck aufgebracht wird.

Der Erfindung liegt die Aufgabe zugrunde, eine Gasturbine der eingangs genannten Art zu schaffen, welche bei einfachem Aufbau und einfacher, kostengünstiger Herstellbarkeit die Nachteile des Standes der Technik vermeidet und ein hohes Maß an Geräuschreduzierung ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Statorschaufeln jeweils zumindest eine Ausnehmung aufweisen, welche in einen Strömungskanal innerhalb der Statorschaufel mündet, und dass der Strömungskanal über zumindest einen mit einem Absperrelement versehenen Ausströmkanal in einen Nebenstromkanal der Gasturbine mündet.

Erfindungsgemäß wird somit durch die zumindest eine Ausnehmung Fluid im Bereich der Statorschaufel abgeführt und aus dem ringförmigen Hauptströmungskanal abgeleitet. Durch diese aktive Maßnahme ist es möglich, in Abhängigkeit vom Arbeitspunkt der Turbomaschine (Gasturbine) eine erhebliche Geräuschminimierung zu erzielen.

Erfindungsgemäß sind die Ausnehmungen in günstiger Ausgestaltung schlitzartig oder als linienartige Reihe von Bohrungen oder Ausnehmungen ausgebildet und befinden sich bevorzugterweise an der Saugseite der Statorschaufel. In besonders günstiger Weiterbildung der Erfindung ist vorgesehen, dass sich die Ausnehmungen im Wesentlichen über die gesamte radiale Länge der Statorschaufel erstrecken. Es ist erfindungsgemäß jedoch auch möglich, die durch die Ausnehmungen geschaffene Ausströmfläche in radialer Richtung zu variieren, so dass sich am radial inneren oder radial äußeren Bereich der Statorschaufel unterschiedliche Ausströmflächen ergeben.

Erfindungsgemäß kann es weiterhin günstig sein, mehrere Ausnehmungen, Schlitze oder Reihen von Löchern vorzusehen, die in Strömungsrichtung aufeinanderfolgend und somit nebeneinander angeordnet sind. Es ist somit möglich, auf einem angrenzend an die Profilhinterkante des Stators (Abströmkante) 15 der Statorschaufel variablen Bereich Fluid abzuführen.

Die Abführung des Fluids erfolgt durch den Strömungskanal innerhalb der Statorschaufel, welcher ein Plenum darstellt, in welchem, bedingt durch ein relativ großes Innenvolumen, ein Abbau von Druckspannungen oder Druckunterschieden erfolgen kann. Mittels des Ausströmkanals wird das Fluid in einen Nebenstromkanal abgeführt. Durch den in dem Nebenstromkanal herrschenden niedrigeren Druck ergibt sich eine Saugwirkung.

Das zumindest eine Absperrelement kann mittels einer geeigneten Steuerung oder Regelung in Abhängigkeit von den Betriebszuständen geöffnet oder geschlossen werden. So ist es beispielsweise möglich, eine Fluggasturbine im Landeanflug erheblich geräuschzureduzieren. Die Erfindung kann somit aktiv in unterschiedlichen Betriebszuständen genutzt werden.

Erfindungsgemäß ergibt sich eine Reihe erheblicher Vorteile. Zum einen ergibt sich eine effiziente Reduktion des tonalen Rotorlärms (Stator-Rotor-Interaktionslärm). Weiterhin ergeben sich keine oder nur sehr geringe Strömungsverluste. Die erfindungsgemäße Lösung ist robust, wartungsarm, zeichnet sich durch ein geringes zusätzliches Gewicht aus und benötigt, außer dem Absperrelement, keine beweglichen Teile. Somit ergeben sich erhebliche Vorteile hinsichtlich der Produktionskosten. Ein weiterer Vorteil liegt darin, dass keine zusätzliche Energie erforderlich ist, außer zur Betätigung des Absperrelementes. Durch die Aktivier-Möglichkeit der Erfindung in Abhängigkeit vom jeweiligen Betriebszustand der Maschine ergibt sich eine sehr vorteilhafte variable Einsatzmöglichkeit.

Es versteht sich, dass die Erfindung auch auf einem Rotor anwendbar ist, aus dessen Rotorblättern Fluid abgeführt und durch eine rotierende Nabe in einen Nebenstromkanal oder die Umgebung abgeleitet wird.

Im Folgenden wird die Erfindung anhand eines Ausführungsbeispiels in Verbindung mit der Zeichnung beschrieben. Dabei zeigt:
- Fig. 1: eine schematische Teil-Axialschnitt-Ansicht,
- Fig. 2: eine Schnittansicht längs der Linie A-A von Fig. 1 in Abwicklung in einer Ebene,
- Fig. 3: eine vergrößerte Schnittansicht durch eine erfindungsgemäße Statorschaufel in Darstellung analog Fig. 2,
- Fig. 4: eine Seitenansicht einer erfindungsgemäßen Statorschaufel in Darstellung analog Fig. 1,
- Fig. 5: eine vereinfachte Schnittansicht in einer senkrecht zu einer Maschinenachse angeordneten Ebene,
- Fig. 6: eine Darstellung der erfindungsgemäßen Strömungsverhältnisse in Schnittansicht A-A analog Fig. 2, und
- Fig. 7: eine Seitenansicht, analog Fig. 4, mit Darstellung von Leitflächen

Die Fig. 1 zeigt eine Maschinenachse 12, zu welcher sich symmetrisch und konzentrisch ein ringförmiger Hauptströmungskanal 1 erstreckt, welcher durch eine Nabenanordnung 22 und eine Gehäuseanordnung 23 begrenzt wird. Außerhalb der Gehäuseanordnung 23 ist ein Nebenstromkanal 10 ausgebildet.

In dem ringförmigen Hauptströmungskanal 1 ist zumindest ein Stator 3 angeordnet, welcher einzelne Statorschaufeln 2 aufweist. (Fig. 2)

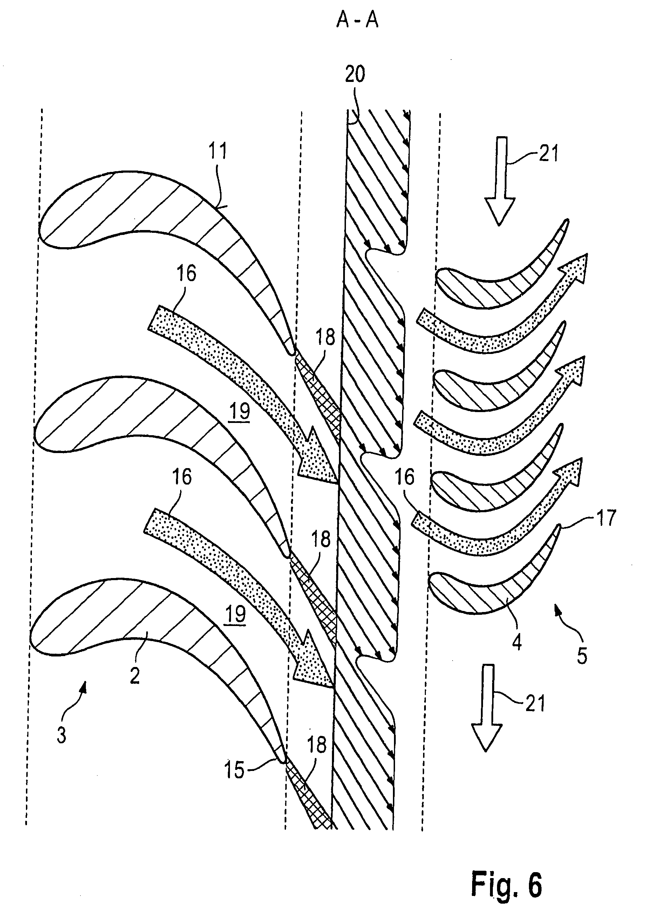

Stromab des Stators 3 ist ein Rotorschaufeln 4 aufweisender Rotor 5 vorgesehen, welcher sich um die Maschinenachse 12 dreht, so wie dies durch die Rotationsrichtung 21 in den Fig. 2 und 6 dargestellt ist.

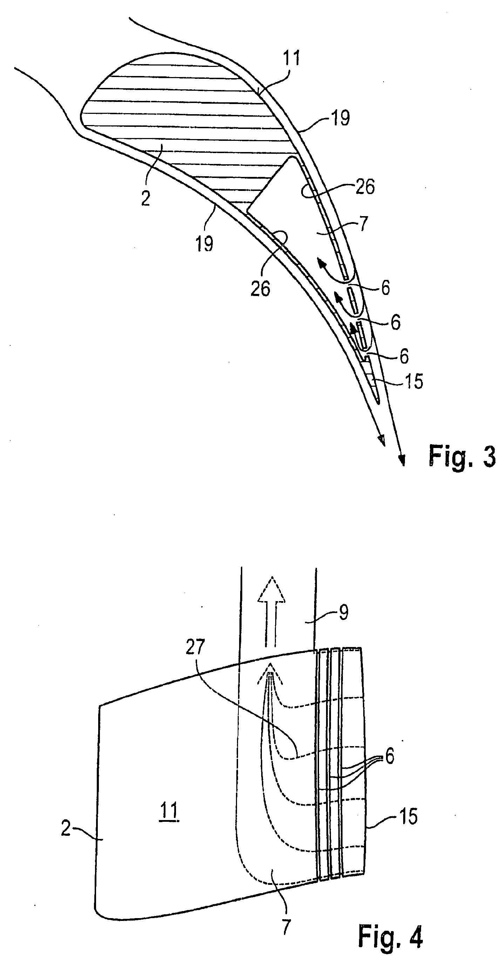

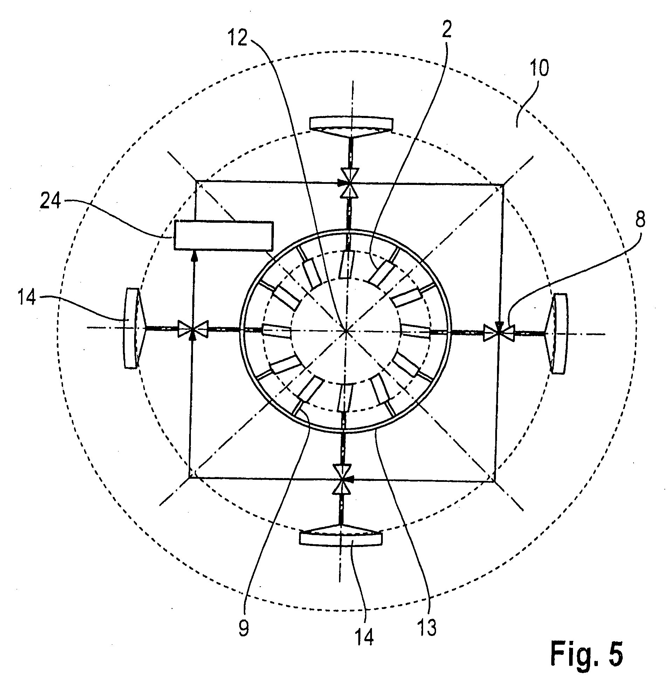

Die Fig. 1, 3 und 4 zeigen in schematischer Darstellung mehrere im wesentlichen parallel zueinander angeordnete, schlitzartige, benachbart zu der Profilhinterkante des Stators (Abströmkante) 15 angeordnete Ausnehmungen 6, durch welche ein Teil der an einer Saugseite 11 der Statorschaufel 2 strömenden Strömung (siehe Fig. 3) in einen Strömungskanal 7 eingeleitet wird, welcher im Innenraum der Statorschaufel 2 ausgebildet ist und ein Plenum bildet. Der Strömungskanal 7 erstreckt sich im Wesentlichen über die gesamte radiale Länge der Statorschaufel 2 und mündet in einen Ausströmkanal 9, welcher in der Gehäuseanordnung 23 ausgebildet ist. Der jeweilige Ausströmkanal 9, welcher jeder einzelnen Statorschaufel 2 zugeordnet ist, mündet in einen Ringkanal 13, so wie dies auch in Fig. 5 dargestellt ist. Der Ringkanal 13 führt somit zu einer Druckvereinheitlichung in Umfangsrichtung.

Die in den Ringkanal 13 eingeführte Strömung wird über zumindest ein Absperrelement 8 einem Diffusor 14 zugeführt, welcher in den Nebenstromkanal 10 mündet. Mittels einer Steuerung sind die einzelnen Absperrelemente (8) (Ventile) jeweils in Abhängigkeit von den Betriebszuständen betätigbar.

Wie sich aus den Figuren ergibt, verlaufen bei dem gezeigten Ausführungsbeispiel die schlitzartigen Ausnehmungen 6 quer zur Strömungsrichtung, sie können in gleichmäßigen oder variierenden Abständen angeordnet sein. Es ist auch möglich, Reihen von Bohrungen oder Löchern vorzusehen und diese in radialer Richtung zu variieren. Somit ist es möglich, geeignete Fluidströme von der Saugseite 11 abzuführen.

Die Anordnung der Ausnehmungen 6, angrenzend an die Profilhinterkante des Stators (Abströmkante) 15, ist vorteilhaft, weil dort die Dicke der impulsarmen Grenzschicht, welche weiter stromab den Nachlauf (Nachlaufgebiet 18) ausmacht, am größten ist.

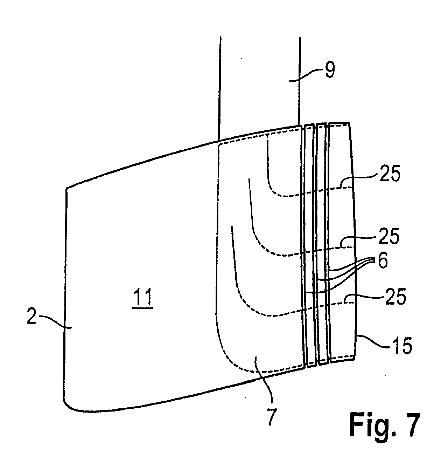

Die Erfindung zeigt in Fig. 7 eine bevorzugte Weiterbildung der Erfindung, bei welcher Leitflächen 25 an den Innenseiten 26 des Plenums (Strömungskanal 7) ausgebildet sind. Diese dienen der Strömungsführung innerhalb des Strömungskanals 7, so wie dies durch die gestrichelten Linien in Fig. 4 dargestellt ist (Strömungsverlauf 27). Durch die in Fig. 7 gezeigten erfindungsgemäßen Leitflächen 25 wird der Strömungsverlauf innerhalb des Plenums 7 (Strömungskanal 7) optimiert

Erfindungsgemäß erfolgt somit eine Absaugung von Fluid aus der Hauptströmung des Arbeitsmediums 16 in der Passage 19 zwischen den Statorschaufeln 2. Wie sich aus den Fig. 1 und 6 ergibt, ist der Druck in der Passage 19 zwischen den Statorschaufeln 2 größer, als der Druck im Nebenstromkanal 10 bzw. der Druck in einer freien Umgebung. Beim Öffnen der Absperrelemente 8 wird durch die Druckdifferenz zwischen der Strömung in den Passagen 19 und dem Nebenstromkanal 10 bzw. der freien Umgebung eine Strömung angetrieben. Dabei wird Fluid aus der Passage 19 durch die Ausnehmungen 6 abgesogen, durch das Plenum (Strömungskanal 7) transportiert und dem Ringkanal 13 zugeleitet. Von dort gelangt das Fluid durch die Absperrelemente 8 und Diffusoren 14 in den Nebenstromkanal 10 bzw. in die freie Umgebung.

Wie in Fig. 6 gezeigt, ergibt sich hierdurch ein Effekt auf die Strömung in der Passage 19. Durch das Absaugen von Fluid aus der wandnahen Strömung (Strömungsgrenzschicht) wird der an den Profilhinterkanten des Stators (Abströmkanten) 15 beginnende Nachlauf 18 (Nachlaufströmung) in seiner Intensität schwächer, seine Ausdehnung in Umfangsrichtung wird schmaler. Das Geschwindigkeitsprofil in Umfangsrichtung 20 wird egalisiert und variiert schwächer. Gegenüber der Darstellung der Fig. 2 (Stand der Technik) ergibt sich aus Fig. 6, dass die räumliche Varianz des Strömungsprofils in Umfangsrichtung sinkt und bei einer relativen Bewegung zwischen Stator 3 und Rotor 5 die zeitliche Varianz und Amplitude des damit verbundenen Druckfeldes, welches den Mechanismus der Schallerzeugung bei der Stator/Rotor-Wechselwirkung bildet, ebenfalls sinkt. Der generierte Lärm ist somit weitaus geringer. Der tonale Interaktionslärm kann damit im Rahmen eines Lärmreduktionspotentials von ca. 5 bis 6 dB reduziert werden.

### Bezugszeichenliste

- 1: Ringförmiger Hauptströmungskanal
- 2: Statorschaufel
- 3: Stator
- 4: Rotorschaufel
- 5: Rotor
- 6: Ausnehmung
- 7: Strömungskanal/Plenum
- 8: Absperrelement
- 9: Ausströmkanal
- 10: Nebenstromkanal
- 11: Saugseite
- 12: Maschinenachse
- 13: Ringkanal
- 14: Diffusor
- 15: Profilhinterkante des Stators (Abströmkante)
- 16: Arbeitsmedium
- 17: Profilhinterkante des Rotors (Abströmkante)
- 18: Nachtaufgebiet/Nachlauf / Nachlaufströmung
- 19: Passage
- 20: Umfangsrichtung
- 21: Rotationsrichtung des Rotors
- 22: Nabenanordnung
- 23: Gehäuseanordnung
- 24: Steuerung
- 25: Leitfläche
- 26: Innenseite
- 27: Strömungsverlauf

## Patentansprüche

1. Turbomaschine mit einem durchströmten ringförmigen Hauptströmungskanal (1), in welchem zumindest ein mit Statorschaufeln (2) versehener Stator angeordnet ist, und die Statorschaufeln (2) jeweils zumindest eine Ausnehmung (6) aufweise welche in einen Strömungskanal (7) innerhalb der Statorschaufeln (2) mündet, **dadurch gekennzeichnet, dass** der Strömungskanal (7) in zumindest einen mit einem Absperrelement (8) versehenen Ausströmkanal (9) in einen Nebenstromkanal (10) der Turbomaschine mündet.

2. Turbomaschine nach Anspruch 1, **dadurch gekennzeichnet, dass** der Stator (3) in Form eines Leitrades ausgebildet ist.

3. Turbomaschine nach Anspruch 1 oder 2, **dadurch gekennzeichnet, dass** die Ausnehmung (6) der Statorschaufel (2) schlitzartig ausgebildet ist.

4. Turbomaschine nach einem der Ansprüche 1 oder 2, **dadurch gekennzeichnet, dass** die Ausnehmung (6) der Statorschaufel (2) als linienartige Reihe von Bohrungen ausgebildet ist.

5. Turbomaschine nach einem der Ansprüche 1 bis 4, **dadurch gekennzeichnet, dass** die Ausnehmungen (6) auf der Saugseite (11) der Statorschaufel (2) angeordnet sind.

6. Turbomaschine nach einem der Ansprüche 1 bis 5, **dadurch gekennzeichnet, dass** die Anordnung der Ausnehmungen (6) angrenzend an eine Profilhinterkante des Stators (15) der Statorschaufel (2) angeordnet ist.

7. Turbomaschine nach einem der Ansprüche 1 bis 6, **dadurch gekennzeichnet, dass** sich die Anordnung im Wesentlichen über die gesamte radiale Länge der Statorschaufel (2) erstreckt.

8. Turbomaschine nach einem der Ansprüche 1 bis 7, **dadurch gekennzeichnet, dass** mehrere Ausnehmungen (6) in gleichen oder unterschiedlichen Abständen zueinander angeordnet sind.

9. Turbomaschine nach einem der Ansprüche 1 bis 8, **dadurch gekennzeichnet, dass** der zumindest eine Ausströmkanal mit einem sich in Umfangsrichtung zu einer Maschinenachse (12) erstreckenden Ringkanal (13) verbunden ist, in welchen die Strömungskanäle (7) der Statorschaufeln (2) münden.

10. Turbomaschine nach einem der Ansprüche 1 bis 9, **dadurch gekennzeichnet, dass** der Ausströmkanal (9) über einen Diffusor (14) in den Nebenstromkanal (10) mündet.

11. Turbomaschine nach einem der Ansprüche 1 bis 10, **dadurch gekennzeichnet, dass** die zumindest eine Ausnehmung (6) zur Verringerung der Intensität und/oder der Ausdehnung in Umfangsrichtung einer an der Profilhinterkante (15) der Statorschaufel (2) abströmenden Nachlaufströmung (18) dimensioniert ausgebildet ist.

12. Turbomaschine nach einem der Ansprüche 1 bis 11, **dadurch gekennzeichnet, dass** das Absperrelement (8) zur Öffnung mittels einer Steuerung (24) bei geräuschrelevanten Betriebszuständen, insbesondere im Landeanflug, ausgebildet ist.

13. Verfahren zur Geräuschminderung einer Turbomaschine, nach einem der Ansprüche 1 bis 12, bei welchem zur Verringerung der Intensität einer an einer Profilhinterkante (15) einer Statorschaufel (2) abströmenden Nachlaufströmung (18) durch zumindest eine Ausnehmung (6) der Statorschaufel (2) eine Fluidströmung durch die Statorschaufel (2) abgeleitet wird.

14. Verfahren nach Anspruch 13, **dadurch gekennzeichnet, dass** die Fluidströmung in einen Nebenstromkanal der Turbomaschine geleitet wird.

15. Verfahren nach einem der Ansprüche 13 oder 14, **dadurch gekennzeichnet, dass** die Fluidströmung von den Ausnehmungen (6) durch einen Strömungskanal (7) innerhalb der Statorschaufeln (2) und/oder einen mit den Strömungskanälen (7) strömungsverbundenen Ringkanal (13) geleitet wird.

## Claims

1. Turbomachine with an annular main flow duct (1) through which passes a flow, and in which is arranged at least one stator provided with stator vanes (2), with the stator vanes (2) each having at least one recess (6) issuing into a flow duct (7) inside the stator vanes (2), **characterized in that** the flow duct (7) issues into a bypass duct (10) of the turbomachine via at least one outflow duct (9) provided with a shut-off element (8).

2. Turbomachine in accordance with Claim 1, **characterized in that** the stator (3) is designed in the form of a stator wheel.

3. Turbomachine in accordance with Claim 1 or 2, **characterized in that** the recess (6) of the stator vane (2) is designed slot-like.

4. Turbomachine in accordance with one of the Claims 1 or 2, **characterized in that** the recess (6) of the stator vane (2) is designed as a line-type row of holes.

5. Turbomachine in accordance with one of the Claims 1 to 4, **characterized in that** the recesses (6) are disposed on the suction side (11) of the stator vane (2).

6. Turbomachine in accordance with one of the Claims 1 to 5, **characterized in that** the arrangement of recesses (6) is disposed adjacent to a profile trailing edge of the stator (15) of the stator vane (2).

7. Turbomachine in accordance with one of the Claims 1 to 6, **characterized in that** the arrangement extends substantially over the entire radial length of the stator vane (2).

8. Turbomachine in accordance with one of the Claims 1 to 7, **characterized in that** several recesses (6) are arranged at equal or varying spacings to one another.

9. Turbomachine in accordance with one of the Claims 1 to 8, **characterized in that** the at least one outflow duct is connected to an annular duct (13) extending in the circumferential direction relative to a machine axis (12), into which annular duct (13) issue the flow ducts (7) of the stator vanes (2).

10. Turbomachine in accordance with one of the Claims 1 to 9, **characterized in that** the outflow duct (9) issues into the bypass duct (10) via a diffuser (14).

11. Turbomachine in accordance with one of the Claims 1 to 10, **characterized in that** the at least one recess (6) is dimensioned such that the intensity and/ or circumferential extension of a wake flow (18) flowing off at the profile trailing edge (15) of the stator vane (2) is reduced.

12. Turbomachine in accordance with one of the Claims 1 to 11, **characterized in that** the shut-off element (8) is designed for being opened by means of a control unit (24) in noise-relevant operating states, in particular during landing approach.

13. Method for reducing the noise of a turbomachine in accordance with one of the Claims 1 to 12, where a fluid flow is drawn off via the stator vane (2) for reducing the intensity of a wake flow (18) flowing off at a profile trailing edge (15) of a stator vane (2) by at least one recess (6) of the stator vane (2).

14. Method in accordance with Claim 13, **characterized in that** the fluid flow is passed into a bypass duct of the turbomachine.

15. Method in accordance with one of the Claims 13 or 14, **characterized in that** the fluid flow from the recesses (6) is passed through a flow duct (7) inside the stator vanes (2) and/ or an annular duct (13) fluidically connected to the flow ducts (7).

## Revendications

1. Turbomachine comprenant un canal d'écoulement principal annulaire (1) traversé par un flux, dans lequel est disposé au moins un stator muni d'aubes de stator (2), sachant que les aubes de stator (2) présentent respectivement au moins un évidement (6) qui débouche dans un canal d'écoulement (7) à l'intérieur des aubes de stator (2), **caractérisée en ce que** le canal d'écoulement (7) débouche par au moins un canal d'éjection (9) muni d'un élément d'arrêt (8) dans un canal de flux secondaire (10) de la turbomachine.

2. Turbomachine selon la revendication n° 1, **caractérisée en ce que** le stator (3) est conçu sous la forme d'une roue de stator.

3. Turbomachine selon la revendication n° 1 ou n° 2, **caractérisée en ce que** l'évidement (6) de l'aube de stator (2) est conçu à la manière d'une fente.

4. Turbomachine selon une des revendications n° 1 ou n° 2, **caractérisée en ce que** l'évidement (6) de l'aube de stator (2) est conçu en tant que rangée linéaire de perçages.

5. Turbomachine selon une des revendications n° 1 à n° 4, **caractérisée en ce que** les évidements (6) sont disposés du côté aspiration (11) de l'aube de stator (2).

6. Turbomachine selon une des revendications n° 1 à n° 5, **caractérisée en ce que** l'arrangement des évidements (6) est disposé jouxtant un bord de fuite du profil du stator (15) de l'aube de stator (2).

7. Turbomachine selon une des revendications n° 1 à n° 6, **caractérisée en ce que** l'arrangement s'étend pour l'essentiel sur la totalité de la longueur radiale de l'aube de stator (2).

8. Turbomachine selon une des revendications n° 1 à n° 7, **caractérisée en ce que** plusieurs évidements (6) sont disposés à distances égales ou inégales les uns des autres.

9. Turbomachine selon une des revendications n° 1 à n° 8, **caractérisée en ce que** l'au moins un canal d'éjection est relié à un canal annulaire (13) s'étendant dans le sens circonférentiel par rapport à un axe de machine (12) et dans lequel débouchent les canaux d'écoulement (7) des aubes de stator (2).

10. Turbomachine selon une des revendications n° 1 à n° 9, **caractérisée en ce que** le canal d'éjection (9) débouche par un diffuseur (14) dans le canal de flux secondaire (10).

11. Turbomachine selon une des revendications n° 1 à n° 10, **caractérisée en ce que** l'au moins un évidement (6) est dimensionné pour réduire l'intensité et/ ou l'étendue dans le sens circonférentiel d'un sillage (18) issu du bord de fuite du profil (15) de l'aube de stator (2).

12. Turbomachine selon une des revendications n° 1 à n° 11, **caractérisée en ce que** l'élément d'arrêt (8) est conçu pour être ouvert au moyen d'une commande (24) dans des états de fonctionnement où le niveau sonore est un critère déterminant, en particulier dans l'approche d'atterrissage.

13. Procédé destiné à réduire le niveau sonore d'une turbomachine selon une des revendications n° 1 à n° 12, dans lequel, pour réduire l'intensité d'un sillage (18) issu d'un bord de fuite du profil (15) d'une aube de stator (2), un flux de fluide est évacué à travers l'aube de stator (2) par au moins un évidement (6) de l'aube de stator (2).

14. Procédé selon la revendication n° 13, **caractérisé en ce que** le flux de fluide est dirigé dans un canal de flux secondaire de la turbomachine.

15. Procédé selon une des revendications n° 13 ou n° 14, **caractérisé en ce que** le flux de fluide est dirigé depuis les évidements (6) à travers un canal d'écoulement (7) à l'intérieur des aubes de stator (2) et/ ou un canal annulaire (13) communiquant avec les canaux d'écoulement (7).
